# DEMANDE DE BREVET EUROPEEN

(11) **EP 0 993 917 A1**
(43) Date de publication de la demande: **19.04.2000**
(21) Numéro de dépôt: 98870212.2
(22) Date de dépôt: 15.10.1998
(51) Int. Cl.: B25J 15/06, G01N 3/08

(54) **Préhenseur d'objet et manipulateur équipé d'un tel préhenseur**

(71) Demandeur: RECHERCHE ET DEVELOPPEMENT DU GROUPE COCKERILL SAMBRE, en abrégé: RD-CS, 4000 Liège (BE)
(72) Inventeur: Briffaerts, Serge, 6044 Roux (BE); Debie, Roger, 4650 Herve (BE); Dona, Paolo, 4430 Ans (BE); Corman, Gérard, 6001 Marcinelle (BE)
(74) Mandataire: Vanderperre, Robert

(57) **Abrégé**

Préhenseur d'objet pour un manipulateur d'objets, comprenant un corps de support (21) portant au moins une ventouse (24, 25) destinée à venir se poser sur un objet, un premier moyen de détection (26, 27) pour détecter la présence d'un objet dans un magasin, et un deuxième moyen de détection pour détecter la présence d'un objet suspendu aux ventouses ou l'absence d'objet suspendu. Un tel préhenseur permet de prélever les échantillons dans des magasins compacts avec un taux de réussite proche de 100%. Il permet, en outre, de réaliser des manipulateurs ayant une souplesse et une précision de fonctionnement remarquables.

## Description

La présente invention s'inscrit dans le domaine de l'automatisation d'une machine de contrôle ou de test. Elle concerne un manipulateur d'objets destiné à alimenter une machine de test, par exemple, une machine d'essai de traction pour éprouvettes prélevées sur des produits sidérurgiques.

Actuellement, pour cette application, on connaît et utilise un manipulateur d'éprouvettes qui prélève les éprouvettes à tester dans les cases d'un magasin associé à la machine d'essais et dans lesquelles les échantillons à tester sont placés dans un ordre bien déterminé. Chaque case ne pouvant contenir qu'un seul échantillon, le magasin est de ce fait relativement encombrant.

Un tel manipulateur se déplace, dans un mouvement de va-et-vient, entre le magasin et la machine d'essais. Il prélève l'échantillon dans la case adéquate, se déplace latéralement jusqu'au système de mesure pour le relevé des dimensions (largeur et épaisseur) afin de déterminer la section de l'échantillon. Il place ensuite cet échantillon entre les mordaches supérieures de la machine, puis après fermeture de celles-ci, comme l'échantillon est tenu, il libère ce dernier pour permettre la fermeture des mordaches inférieures. Dès que l'essai est terminé et les deux parties de l'échantillon évacuées, le manipulateur reprend son déplacement latéral pour prélever l'échantillon suivant. Outre qu'il est encombrant, ce manipulateur connu présente l'inconvénient d'être conçu pour une machine spécifique à laquelle il doit être associé.

Un but de la présente invention est de réaliser un manipulateur qui puisse être géré dans ses mouvements de manière autonome, indépendamment de la machine qu'il alimente.

Un autre but de l'invention est de proposer un manipulateur d'objets qui soit d'un maniement à la fois souple, précis et fiable.

Un autre but encore de l'invention est de réaliser un manipulateur qui soit nettement moins encombrant et d'un coût raisonnable.

Ces buts sont atteints par un manipulateur d'objets qui, suivant l'invention, comprend un appareil, de type robot, agencé pour pivoter autour de plusieurs axes et équipé d'un préhenseur pour prélever un objet dans un magasin.

Dans un tel manipulateur, un organe important sinon le plus important est le préhenseur car c'est de lui et de ses capacités, ainsi que du mode d'emmagasinage, que dépendent la précision, la fiabilité et la rapidité des manipulations d'objets, ce qui sont des facteurs essentiels dans l'enchaînement des opérations et l'exécution des tâches, telles que des contrôles en cadence de la qualité de produits industriels.

C'est pourquoi la présente invention a plus particulièrement pour objet un préhenseur nouveau pouvant être utilisé sur un manipulateur d'objets.

A cet effet, l'invention propose un robot muni d'un tel système et qui comprend des ventouses destinées à venir se poser sur un objet. Ce préhenseur est doté d'un premier moyen de détection de présence d'un objet dans un magasin, et d'un deuxième moyen de détection pour détecter la présence d'un objet suspendu aux ventouses ou l'absence d'objet suspendu.

Le préhenseur suivant l'invention permet de prélever les échantillons dans des magasins compacts avec un taux de réussite proche de 100%. Il permet, en outre, de réaliser des manipulateurs ayant une souplesse et une précision de fonctionnement remarquables.

Un exemple de mode de réalisation de l'invention est décrit dans ce qui suit à l'aide des dessins joints, dans lesquels :
- la figure 1 est une vue en élévation du robot dans lequel est incorporée l'invention;
- la figure 2 est une vue en plan du robot de la figure 1;
- les figures 3 et 4 sont des vues similaires à celles des figures 1 et 2, respectivement, montrant les différents axes de mouvement du robot;
la figure 5 montre une vue en perspective du système de détection suivant l'invention;
la figure 6 est une vue en plan du système de détection de la figure 5;
la figure 7 est une vue de profil du système de détection de la figure 5;
la figure 8 montre une vue de face du système de détection de la figure 5.

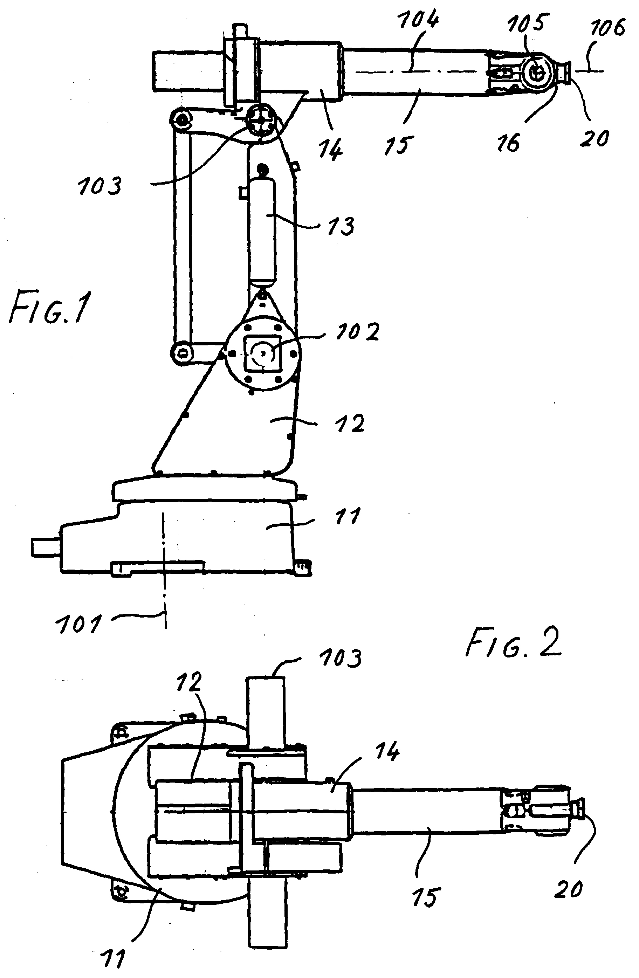

Sur les figures 1 et 2, est représenté, à titre d'exemple, un mode de réalisation de robot auquel l'invention peut être appliquée. Il s'agit d'un robot agencé pour pouvoir pivoter, dans un plan horizontal, autour de plusieurs axes de rotation. Un socle 11 porte un corps 12 monté pour pouvoir pivoter autour d'un axe vertical 101. Le corps 12 porte un axe horizontal 102 pouvant se mouvoir dans un plan vertical et autour duquel est articulé un bras inférieur 13. A l'extrémité supérieure du bras 13 est fixé un axe horizontal 103 autour duquel est articulé un porte-bras 14 dans lequel est monté un bras supérieur 15. Celui-ci est monté de manière à pouvoir tourner autour de son axe longitudinal 104. A l'extrémité du bras supérieur 15 est fixé un axe horizontal 105 autour duquel est articulé un tourillon 16 portant un poignet 20 monté de manière à pouvoir tourner autour d'un axe de rotation central 106. La face extérieure du poignet 20 est équipée d'un préhenseur à ventouses (non représenté) qui sera décrit plus loin.

Dans le robot décrit ci-avant, grâce à leurs liaisons articulées, les axes se meuvent dans trois systèmes de coordonnées :
a) un système de coordonnées fixe centré sur l'axe vertical 101, permettant aux axes 102, 103 et 105 de suivre un mouvement de rotation par rapport au socle 11;
b) un système de coordonnées fixe centré sur l'axe horizontal 102, permettant aux axes 103 et 105 de suivre un mouvement de rotation par rapport au corps 12;
c) un système de coordonnées mobile centré sur l'axe horizontal 104, permettant au préhenseur monté sur le poignet 20 de suivre un mouvement de pivotement dans l'espace par rapport au bras inférieur 13.

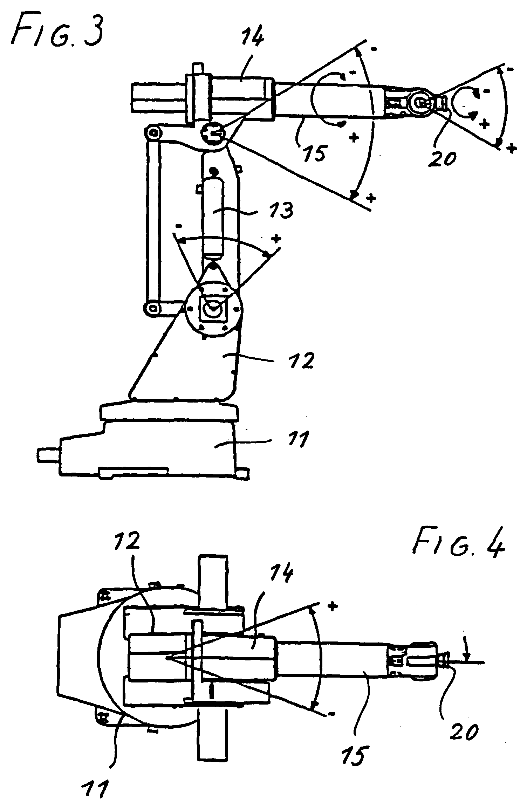

Les différents mouvements des éléments du manipulateur suivant l'invention sont illustrés sur les figures 3 et 4. Ces différents mouvements peuvent être résumés comme suit :
1) rotation complète de l'ensemble du robot par rapport au socle 11,
2) basculement vers l'avant et vers l'arrière du bras inférieur 13,
3) basculement vertical du bras supérieur 15,
4) rotation du bras supérieur 15 autour de son axe longitudinal 104,
5) inclinaison du poignet 20 autour de l'axe 105,
6) rotation du préhenseur 20 autour de son centre situé en alignement avec l'axe 104 du bras supérieur.

Cette combinaison de mouvements dans les trois systèmes de coordonnées précités permet au préhenseur de prendre une multitude de positions dans l'espace, positions qui peuvent être programmées sélectivement point par point. Ceci assure à un point spécifique du préhenseur, que l'on appelle point central de l'outil (TCP), de toujours suivre un mouvement bien défini dans l'espace, conférant au robot une grande souplesse et une grande précision de manipulation.

Le fonctionnement du robot est commandé par un automate programmé de manière à synchroniser les déplacements du préhenseur à chaque étape du test en cours.

Dans une installation robotisée telle que, par exemple, une machine d'essais de traction sur des échantillons, l'organe le plus important est le préhenseur qui doit prélever les éprouvettes et les déplacer d'un poste à l'autre car c'est de ses capacités que dépendent à la fois l'organisation des différents postes de travail et la fiabilité des essais effectués. Le préhenseur suivant l'invention est conçu pour prélever les échantillons dans des magasins dans lesquels ils sont empilés les uns sur les autres.

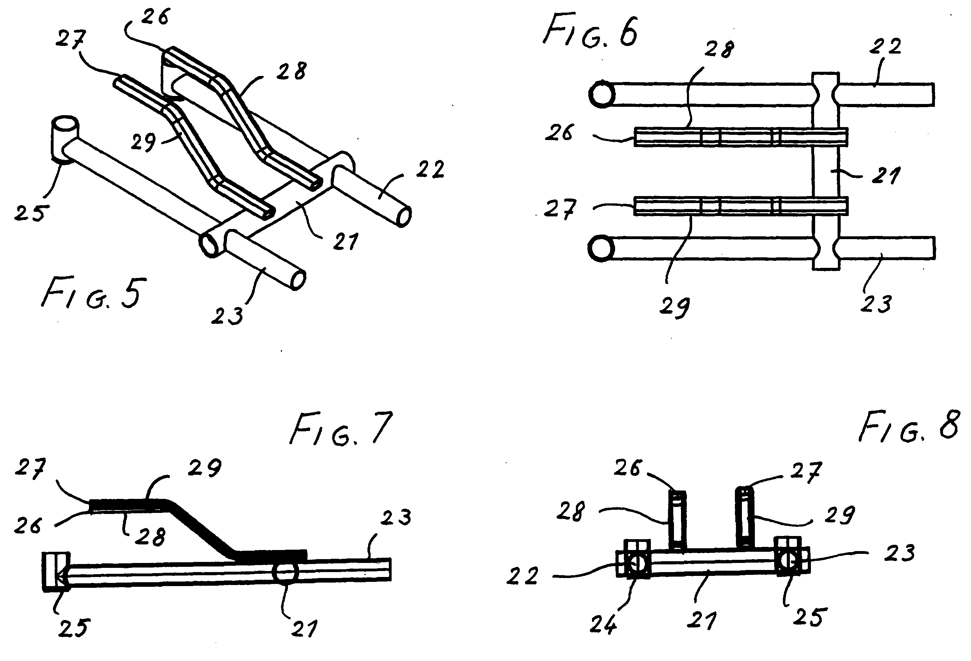

Les figures 5 et 6 représentent un préhenseur suivant l'invention. Un corps de support 21 porte deux bras 22 et 23 à l'extrémité desquels sont fixées deux ventouses 24 et 25 destinées à venir se poser sur un échantillon pour le prélever dans le magasin. Les bras 22 et 23 sont creux afin de pouvoir créer une dépression pour aspirer l'échantillon et le maintenir suspendu aux ventouses. Les bras 22 et 23 portent également des capteurs de vide (non représentés) qui détectent immédiatement soit la chute d'un échantillon prélevé, soit l'absence d'échantillon. Les ventouses sont choisies d'un type souple de manière à permettre le glissement de l'échantillon sans le perdre lors de la préhension, même lorsque l'échantillon est d'un poids non négligeable.

Le corps de support 21 porte également deux capteurs dans lesquels se trouvent des fibres optiques 26 et 27 débouchant à l'extrémité de tubes support 28 et 29 afin de détecter la présence d'un échantillon dans le magasin. Chaque tube support dispose de deux fibres : une fibre servant d'émetteur et une fibre servant de récepteur. Chacun de ces tubes enferme donc deux fibres optiques et deux capteurs. Ainsi, en cas de défaillance d'une fibre optique ou d'un capteur, la seconde fibre et le capteur qui lui est associé peuvent toujours assurer la détection. Les tubes support 28 et 29 sont réalisés de manière que les deux capteurs 26 et 27 soient disposés à deux niveaux différents, par exemple de manière que l'un des capteurs soit situé 2 mm environ plus haut que l'autre. Cette disposition permet de détecter la présence d'un échantillon avec une grande précision et une grande fiabilité.

Le rôle essentiel du préhenseur suivant l'invention apparaîtra plus clairement au cours de l'exposé ci-après, qui décrit les interventions du préhenseur à chaque poste de travail d'une installation d'essais de traction.

La première opération au cours d'un cycle d'essai et de mesure consiste à prélever un échantillon dans un magasin. A cet effet, le robot amène le préhenseur en face d'un magasin conçu pour présenter les échantillons empilés les uns sur les autres. Le capteur à fibre optique en position la plus basse, par exemple le capteur 26, détecte d'abord la présence du magasin, puis descend verticalement dans le magasin jusqu'à ce qu'il détecte la présence d'un échantillon. Cette présence d'un échantillon est également détectée par le capteur en position la plus haute, par exemple le capteur 27, lorsque le premier capteur a été en défaut de le faire. Dès qu'un échantillon se trouve détecté, les ventouses se posent sur l'échantillon et, suite à l'absence de vide aux ventouses, un contact se ferme. Le robot s'arrête. Il s'arrête également lorsqu'il arrive en position basse du magasin suite aux réponses négatives des trois sécurités : les deux fibres optiques et le vide aux ventouses (pas d'échantillon dans le magasin).

Lorsque le robot est arrêté par une des trois sécurités, il exécute un programme différent pour chaque cas puisque la hauteur des capteurs est différente. L'échantillon est alors extrait du magasin et l'identification de celui-ci est prise en compte. Les magasins sont encodés, et cet encodage automatique est utilisable dès que les numéros d'échantillons se suivent, ce qui accélère l'opération d'encodage.

Dans le cas où le robot s'arrête en position basse du magasin, le robot descend à trois reprises de 2/10 de mm : s'il ne trouve pas d'échantillon, il sort du magasin et teste son détecteur de vide à un emplacement réservé. La triple descente sert surtout pour le dernier échantillon qui pourrait être très fin. Il se produit une descente de 6/10 de mm en trois fois avant de déclarer un défaut d'encodage d'un magasin.

Dans le cas où le détecteur est défectueux, l'installation est arrêtée, sinon on conclut qu'il y a eu une erreur à l'encodage du magasin. En effet, le nombre d'échantillons est alors supérieur au nombre réel d'échantillons. Le magasin est alors abandonné et le processus recommence avec le magasin suivant.

Cette suite de tests permet d'avoir un taux de réussite très proche de 100%. N'oublions pas qu'un échantillon peut avoir une épaisseur variant entre 120 et 5000 µm. Si les épaisseurs sont très fines, les fibres optiques ne sont pas fiables mais le détecteur de vide est très efficace car l'échantillon est aspiré et le vide est détecté.

La technique d'empilage des échantillons permet d'avoir une autonomie de 2000 échantillons sur un espace très petit. Le magasin général est composé d'une vingtaine de magasins facilement transportables. Chaque magasin ne peut être placé alors qu'à un seul endroit. Il est avantageusement doté d'un système de verrouillage mécanique.

Pour réaliser la mesure de section de l'échantillon et surtout pour la mesure de la largeur, il est indispensable que l'échantillon soit toujours présenté au même endroit par rapport aux ventouses. Dans ce but, le préhenseur se trouve présenté devant un butoir de positionnement et il fait glisser l'échantillon de façon à le positionner aux bords des ventouses. A cet égard, le choix des ventouses est déterminant, car le choix d'une ventouse souple permet le glissement de l'échantillon sans le perdre. Certains échantillons pouvant avoir une épaisseur de 5 mm, leur poids n'est pas négligeable et ils doivent également pouvoir glisser sans tomber.

Après ce positionnement, le préhenseur est écarté du butoir. Le détecteur de vide permet de savoir à chaque instant que l'échantillon n'est pas tombé. Lorsqu'un échantillon tombe, il est abandonné et un autre échantillon est extrait du magasin. Par contre, lorsque l'échantillon est présent, le préhenseur l'amène au mesureur de section. Celui-ci est composé essentiellement de quatre palpeurs de précision; deux pour la mesure d'épaisseur et deux pour la mesure de largeur.

Comme la précision du robot est insuffisante pour la mesure d'épaisseur, il a été prévu des palpeurs qui travaillent en mode différentiel, ce mode permettant d'avoir une très grande précision, surtout dans les faibles épaisseurs.

La mesure de largeur et d'épaisseur peut se faire en trois points différents, tout cela étant programmable via l'ordinateur. Le préhenseur joue encore ici un rôle essentiel, car la flexibilité des ventouses est nécessaire pour faire ces mesures correctement. Durant la mesure, l'échantillon est toujours maintenu par les ventouses.

Les résultats de mesure sont envoyés à l'ordinateur qui peut contrôler si elles sont valables, et faire les calculs nécessaires dans le cas d'une mesure multiple. L'ordinateur peut alors décider d'abandonner l'échantillon s'il y a trop de dispersion. Lorsque les mesures sont rejetées par l'ordinateur, le robot présente trois échantillons étalons pour vérifier la bonne marche du mesureur de section. En cas de mauvais fonctionnement du mesureur, l'installation est mise à l'arrêt. Par contre, lorsque l'ordinateur accepte les mesures d'épaisseur et de largeur, l'échantillon est sorti du mesureur de section et on vérifie s'il est toujours présent. Dans l'affirmative, l'ordinateur associe l'identification à la mesure de section. L'échantillon est alors dirigé vers le poste suivant, c'est-à-dire la machine de traction.

Le robot attend que la machine soit libre, il introduit les données (identification et mesure de section) dans l'ordinateur de la machine de traction. Le robot positionne l'échantillon entre les mâchoires et vient encore contre un petit butoir qui permet de faire glisser l'échantillon pour qu'il soit parfaitement positionné afin que l'essai se déroule dans de bonnes conditions (positionnement parfait grâce aux ventouses). Lorsque l'échantillon est bien placé, la mâchoire supérieure est fermée, l'échantillon est libéré des ventouses, la mâchoire inférieure se ferme ensuite et le robot sort le préhenseur de la machine.

L'ordre de démarrage de l'essai de traction est envoyé et les résultats sont récupérés et envoyés chez le client après un test de plausibilité. L'évacuation des deux morceaux d'éprouvette se fait par un ingénieux petit dispositif placé sur les mâchoires : la boucle est alors fermée et un nouveau cycle peut être lancé.

Il est évident que l'installation décrite ci-avant nécessite une multitude de contrôles et d'échanges de données entre les différents systèmes informatiques de l'installation.

On observera que le préhenseur suivant l'invention permet une approche tout à faire différente du concept d'un essai de traction réalisé à l'aide d'un robot classique. Avec l'invention, l'échantillon n'est lâché à aucun moment par le système à ventouses et le détecteur de vide signale immédiatement la perte de l'échantillon. Grâce à l'invention, l'installation possède une gestion d'erreur très poussée avec auto-contrôle qui permet au système d'encore continuer son travail, même en cas de problèmes. Un facteur de gravité d'erreur permet à l'ordinateur de réagir immédiatement en fonction de l'erreur détectée.

Il est entendu que le mode de réalisation décrit ci-avant et illustré sur les dessins est un exemple donné à titre illustratif et que diverses variantes d'exécution peuvent être apportées par l'homme de métier sans sortir de l'esprit et du cadre de l'invention.

## Revendications

1. Préhenseur d'objet pour un manipulateur d'objets, caractérisé en ce qu'il comprend un corps de support (21) portant au moins une ventouse (24, 25) destinée à venir se poser sur un objet, un premier moyen de détection (26, 27) pour détecter la présence d'un objet dans un magasin, et un deuxième moyen de détection pour détecter la présence d'un objet suspendu aux ventouses ou l'absence d'objet suspendu.

2. Préhenseur d'objet suivant la revendication 1, caractérisé en ce que le premier moyen de détection est constitué d'au moins un capteur à fibre optique.

3. Préhenseur d'objet suivant la revendication 1, caractérisé en ce que le premier moyen de détection est constitué de deux capteurs à fibre optique (26, 27) disposés à deux niveaux différents.

4. Préhenseur d'objet suivant la revendication 2 ou 3, caractérisé en ce que chaque capteur à fibre optique est doublé.

5. Préhenseur d'objet suivant la revendication 1, caractérisé en ce que la ou chaque ventouse (24, 25) est constituée d'une matière souple.

6. Préhenseur d'objet suivant l'une quelconque des revendications précédentes, caractérisé en ce que le corps de support (21) est en fibre de verre.

7. Manipulateur d'objets, caractérisé en ce qu'il est équipé d'un préhenseur suivant l'une quelconque des revendications précédentes.

8. Manipulateur d'objets pour alimenter une machine de contrôle ou d'essais, caractérisé en ce qu'il comprend un appareil agencé pour pivoter autour de plusieurs axes, ledit appareil étant équipé d'un préhenseur (20) pour saisir un objet dans un magasin, ledit préhenseur comprenant un corps de support (21) portant au moins une ventouse (24, 25) destinée à venir se poser sur un objet, un premier moyen de détection (26, 27) pour détecter la présence d'un objet dans un magasin, et un deuxième moyen de détection pour détecter la présence d'un objet suspendu aux ventouses ou l'absence d'objet suspendu.

9. Manipulateur d'objets suivant la revendication 8, caractérisé en ce que le premier moyen de détection est constitué de deux capteurs à fibre optique (26, 27) disposés à deux niveaux différents.

10. Manipulateur d'objets suivant la revendication 9, caractérisé en ce que chaque capteur à fibre optique est doublé.

11. Manipulateur d'objets suivant la revendication 8, caractérisé en ce la ou chaque ventouse (24, 25) est constituée d'une matière souple.
